Europäisches Patentamt

European Patent Office

Office européen des brevets

(19)

(11) Veröffentlichungsnummer: **0 031 961**
**A1**

(12) # EUROPÄISCHE PATENTANMELDUNG

(21) Anmeldenummer: **80108220.7**

(22) Anmeldetag: **30.12.80**

(51) Int. Cl.³: **A 47 J 51/093**
**A 47 J 51/097**

(30) Priorität: **02.01.80 IT 930180**

(43) Veröffentlichungstag der Anmeldung:
**15.07.81 Patentblatt 81/28**

(84) Benannte Vertragsstaaten:
**AT BE CH DE FR GB LI NL**

(71) Anmelder: **Guerrini, Gino
Via Settore Nord Est 30
Terranuova Bracciolini Arezzo(IT)**

(72) Erfinder: **Guerrini, Gino
Via Settore Nord Est 30
Terranuova Bracciolini Arezzo(IT)**

(74) Vertreter: **Glawe, Richard Dr. Richard Glawe Dipl.-Ing.
Klaus Delfs et al,
Dr. Walter Moll Dr. Ulrich Mengdehl Dr. Heinrich
Niebuhr Postbox 260162
D-8000 München 26(DE)**

(54) Kunststoffkleiderbügel mit Hosenstange, der als einstückiges Spritzgussteil ausgebildet ist, sowie Verfahren zu seiner Herstellung.

(57) Ein anatomisch geformter Kleiderbügel mit Hosenstange ist als einstückiges Spritzgußteil aus Kunststoff ausgebildet, wobei das obere Teil, (1) das mit breiter konvexer Auflagefläche zur guten Formabstützung des Kleidungsstücks ausgebildet ist, nahe seinen Enden zwei Schlitze (7) aufweist, die mit der Hosenstange (3) fluchten und deren hinterschneidungsfreie Anformung ermöglichen.

Fig.1

EP 0 031 961 A1

Kunststoffkleiderbügel mit Hosenstange, der als einstückiges Spritzgußteil ausgebildet ist, sowie Verfahren zu seiner Herstellung

Die Erfindung betrifft einen Kunststoffkleiderbügel mit Hosenstange, der als einstückiges Spritzgußteil ausgebildet
ist, sowie ein Verfahren zu seiner Herstellung.

Es sind zweiArten von Kleiderbügeln bekannt, die eine als
Hosenstange dienende Traverse besitzen:

Die erste Art, die einen besonders hohen Gebrauchswert besitzt, wird in zwei Teilen hergestellt: Dem eigentlichen
Kleiderbügelteil, das einen U-förmigen Querschnitt besitzt
und eine vergleichsweise breite konvexe Auflagefläche für
Kragen und Schultern des Kleidungsstückes besitzt und welches im Bereich seiner beiden Enden zwei Innensitze aufweist,
sowie einer Hosenstange, die getrennt von dem eigentlichen
Kleiderbügel als Spritzgußteil hergestellt und anschliessend mit diesem durch einen Klebevorgang verbunden wird.
Kleiderbügel dieser Art werden als "anatomisch" geformte
Kleiderbügel bezeichnet.

Eine zweite Art von Kleiderbügeln, deren Gebrauchswert geringer ist, wird als einstückiges Kunststofformteil hergestellt,
welches sowohl den eigentlichen Kleiderbügel als auch die Hosenstange bildet. Bei Kleiderbügeln dieser Art ist die konvexe Auflagefläche für die Schultern des Kleidungsstückes vergleichsweise schmal und besitzt an der Vorderseite eine
ausgeprägte Aushöhlung. Diese ist unvermeidlich, wenn der
Kleiderbügel als einstückiges Teil hergestellt werden soll.
Kleiderbügel dieser Art werden von den Kleiderherstellern,
insbesondere für bestimmte Kleidungsstücke, nicht verwendet,
da diese Kleidungsstücke durch die gegenüber dem Gipfelbereich dieser Auflagefläche stark versetzte Vorderkante, die
in dem Kleidungsstück einen Abdruck hinterläßt, beschädigt
werden.

Der Erfindung liegt die Aufgabe zugrunde, einen Kleiderbügel zu schaffen, der die Vorteile und Zweckmäßigkeit des
Kleiderbügels der erstgenannten (anatomisch geformten) Art
mit einer sehr einfachen Konstruktion verbindet und damit
in seiner Wirtschaftlichkeit mit Kleiderbügeln der zweitgenannten Art vergleichbar ist.

Gegenstand der Erfindung ist ferner ein Verfahren sowie ein
Formwerkzeug zur Herstellung des Kleiderbügels.

Der Kleiderbügel gemäß der Erfindung ist dadurch gekennzeichnet, daß das den eigentlichen Kleiderbügel bildende
obere Teil, welches für eine gute Auflage des Kleidungsstückes eine vergleichsweise breite konvexe Auflagefläche
besitzt, in seinen Endbereichen zwei durchgehende Schlitze
aufweist, deren Position der Hosenstange entspricht, derart daß letztere auf Grund der Anordnung der Schlitze
gleichzeitig mit dem die konvexe Auflagefläche bildenden
oberen Teil ohne Hinterschneidungen einstückig herstellbar ist.

Die erwähnten Schlitze sind also derart angeordnet, daß
das Formwerkzeug für die Hosenstange durch sie hindurchtreten kann und damit die Ausbildung des Kleiderbügels als
einstückiges Spritzgußteil möglich ist, ohne daß die konvexe Auflagefläche des Kleiderbügels mit einer vorderen
Ausnehmung versehen sein muß und ohne daß die Hosenstange nach vorne versetzt sein muß. Damit ist gleichzeitig vermieden, daß das Gleichgewicht gestört wird, wenn der Kleiderbügel beladen und aufgehängt ist.

Die beiden Schlitze sind vorteilhafterweise von Wandungen flankiert, die ohne Störung des kontinuierlichen Verlaufes von den konvexen Oberflächen des Kleiderbügels ausgehen und aus dem unteren konkaven Bereich des Kleiderbügels herausragen. Die oberen Kanten an den Verbindungsstellen zwischen den Schlitzen und der oberen konvexen Auflagefläche des Kleiderbügels sind in geeigneter Weise so gestaltet, daß sie keine Eindrücke in dem Kleidungsstück hinterlassen.

Die Schlitze können vergleichsweise eng bemessen sein, so daß sie praktisch keine Beeinträchtigung des aufgehängten Kleidungsstückes verursachen; die Breite der Schlitze ist an sich bestimmt durch die Breite der ihnen entsprechenden Hosenstange. Es kann jedoch auch vorgesehen sein, daß sich die Hosenstange in dem zwischen den beiden Schlitzen liegenden Bereich verbreitert, während ihre Breite in den den Schlitzen entsprechenden Endabschnitten verringert ist, so daß die Breite der Schlitze selbst ebenfalls verringert sein kann. Die Hosenstange kann sich entweder in beiden Richtungen ihres Querschnittes verbreitern oder aber vorzugsweise an ihrer Vorderseite.

Das Verfahren zur Herstellung des Kleiderbügels gemäß der Erfindung sieht die Verwendung eines Formwerkzeuges vor, dessen konkaver Teil mit einem Ansatz versehen ist, der der Form der Hosenstange entspricht, wobei dieser Ansatz auch die genannten Schlitze definiert.

Im folgenden sei die Erfindung anhand der Zeichnungen näher erläutert:

Fig. 1 zeigt einen Kleiderbügel gemäß der Erfindung in einer perspektivischen Ansicht,

Fig. 2, 3 und 4 zeigen einen Schnitt entsprechend der Linie
II-II von Fig. 1, einen Schnitt entsprechend der Linie III-III von Fig. 2 bzw. eine Teilsicht von oben
entsprechend der Linie IV-IV von Fig. 3,

Fig. 5 zeigt einen Transversalschnitt des Kleiderbügels im
Bereich eines Schlitzes sowie die Konstruktion des
Formwerkzeuges zu seiner Herstellung,

Fig.6 zeigt eine Variante, wobei die Ansicht derjenigen
von Fig. 4 analog ist.

Der in der Zeichnung dargestellte Kleiderbügel umfaßt ein
Teil 1, das den eigentlichen Kleiderbügel bildet, ein Teil
3, das die Hosenstange darstellt sowie einen Haken 5. Die
Teile 1 und 3 sind einstückig als Spritzgußteil ausgebildet,
während der Haken 5 eingesetzt ist. Das Teil 1 besitzt eine
konvexe aktive Oberfläche für die Auflage des Kleidungsstückes. Diese Auflagefläche erstreckt sich sowohl nach vorne als auch in Rückenrichtung derart, daß ihre Begrenzungskanten keine Eindrücke in dem Kleidungsstück hervorrufen,das
sich auf dem Kleiderbügel befindet. Teil 1 ist im wesentlichen in der gleichen Weise ausgebildet wie die bekannten
Kleiderbügel der eingangs erwähnten ersten Art.

Erfindungsgemäß besitzt das Teil 1 des Kleiderbügels im Bereich seiner Enden jeweils einen Schlitz 7, der von dem inneren Begrenzungsrand der Auflagefläche 1 ausgeht. Die beiden Schlitze 7 fluchten miteinander und liegen einander gegenüber. Im Bereich des Schlitzes 7 befindet sich die Hosenstange 3. Letztere besitzt einen oberen Abschnitt 3A, der
konvex ausgebildet ist und horizontal verläuft, sowie eine
untere Verstärkungsrippe. Es können auch zwei derartige Verstärkungsrippen vorgesehen sein, so daß die Stange einen
U-förmigen Querschnitt besitzt. Die Stange ist an ihren Enden so geformt, daß sie sich mit dem Schlitz 7 verbindet.
Die Verbindungsstelle befindet sich an dem mit 7B bezeichneten unteren Teil der Wandung 7A, die sich von der konvexen Auflagefläche des Teiles 1, d.h. von dem konkaven Hohlraum dieses Teiles 1 nach unten erstreckt. Auf diese Weise läßt sich die Stange 3 zusammen mit dem Teil 1 herstellen, wobei Hinterschneidungen vermieden sind, die sich ergeben würden, wenn die Schlitze 7 nicht vorgesehen wären.

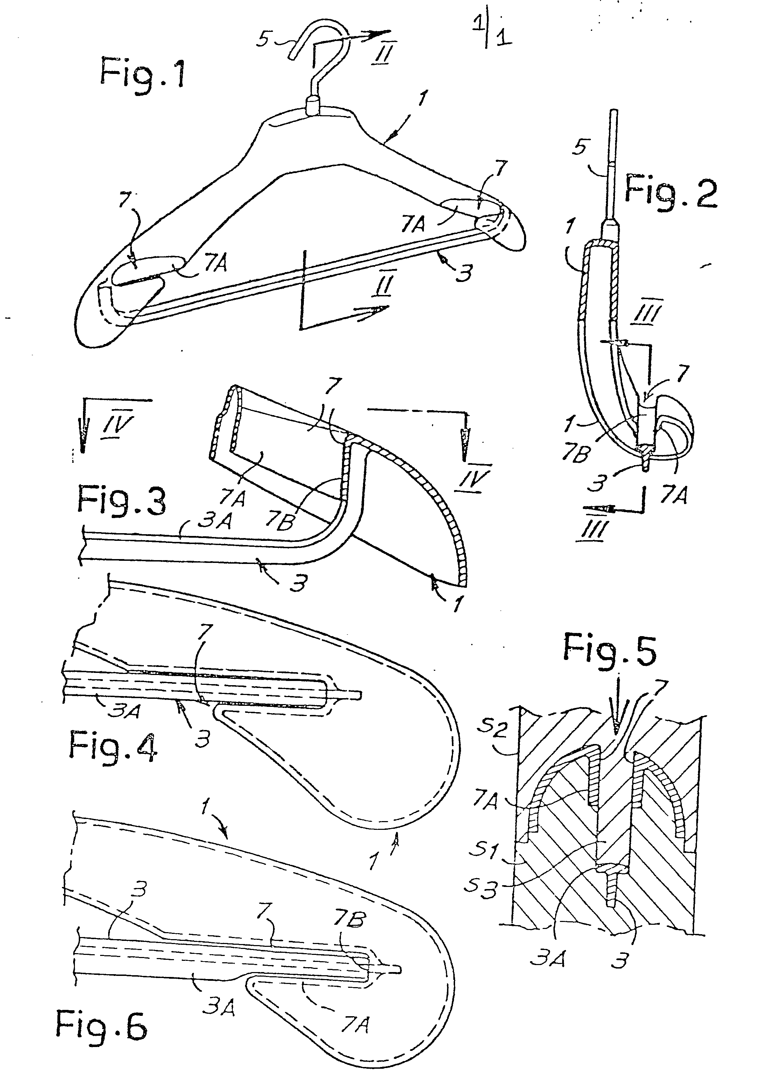

Für den Spritzguß sind Fomrwerkzeugteile S1 und S2 (Fig.5) vorgesehen. Das Teil S2 besitzt einen Ansatz S3, der in einen entsprechenden Hohlraum des Werkzeugteiles S1 eindringt und somit die Schlitze 7 und das Rückenteil 3A der Stange 3 definiert.

Die Breite der Schlitze 7 beschränkt sich auf die vergleichsweise begrenzte Breite der Stange 3. Es ist auch möglich, die Breite des Rückenteiles 3A der Stange 3 im Bereich der Schlitze 7 zu verringern, wie dies in Fig. 6 angedeutet ist. Auf diese Weise kann die Breite der Schlitze 7 geringer gehalten werden als die zweckmäßigerweise notwendige Breite des Rückenteiles 3A der Stange 3. Um eine größere Breite des Rückenteiles 3A der Stange 3 über eine Länge zu erreichen, die für das Auflegen von Hosen oder dergleichen ausreichend ist, können die Schlitze 7 aus der in Fig. 4 dargestellten Position in die in Fig. 6 gezeigte Position versetzt sein. Auf diese Weise erhält man die gewünschte größere Länge des verbreiterten Teiles der Stange 3. Das Ausmaß dieser Versetzung ist offensichtlich durch die Notwendigkeit beschränkt, daß der beladene und an seinem Hakeb 5 aufgehängte Kleiderbügel sich im Gleichgewicht befinden muß. Die Verbreiterung des Teiles 3A der Stange 3 kann symmetrisch sein. Die Stange 3 kann jedoch auch ausschließlich nach vorne verbreitert sein.

In jedem Fall ist die Breite der Schlitze 7 hinreichend klein, so daß das Kleidungsstück, das auf der konvexen Auflagefläche des Teiles 1 hängt, durch den von den Schlitzen 7 gebildeten Leerraum nicht beeinträchtigt wird.

Patentansprüche

1. Kunststoffkleiderbügel mit Hosenstange, der als einstückiges Spritzgußteil ausgebildet ist, d a d u r c h  gekennzeichnet, daß das den eigentlichen Kleiderbügel bildende
obere Teil (1), welches für eine gute Auflage des Kleidungsstückes eine vergleichsweise breite konvexe Auflagefläche besitzt, in seinen Endbereichen zwei durchgehende
Schlitze (7) aufweist, deren Position der Hosenstange (3)
entspricht, derart daß letztere auf Grund der Anordnung
der Schlitze (7) gleichzeitig mit dem die konvexe Auflagefläche bildenden oberen Teil (1) ohne Hinterschneidungen einstückig herstellbar ist.

2. Kleiderbügel nach Anspruch 1, d a d u r c h  gekennzeichnet, daß die beiden Schlitze (7) zueinander fluchtend angeordnet sind.

3. Kleiderbügel nach Anspruch 1 oder 2, d a d u r c h  gekennzeichnet, daß die beiden Schlitze (7) von Wandungen
(7A, 7B) flankiert sind, die ohne Unterbrechung des kontinuierlichen Verlaufes der konvexen Flächen des oberen
Teiles (1) des Kleiderbügels von der konkaven Unterseite derselben ausgehen.

4. Kleiderbügel nach einem der vorhergehenden Ansprüche,
d a d u r c h  gekennzeichnet, daß die Schlitze (7) vergleichsweise eng sind und daß die Breite der Stange (3)
in dem zwischen den beiden Schlitzen (7) liegenden Abschnitt vergrößert ist, wobei die Verbreiterung entweder symmetrisch auf beiden Seiten des Stangenquerschnittes oder nur auf der Vorderseite vorgesehen ist.

5. Verfahren zur Herstellung eines Kleiderbügels nach einem
der vorhergehenden Ansprüche, g e k e n n z e i c h n et
durch die Verwendung eines Formwerkzeuges (S2), dessen

**0031961**

konkaver Teil einen Ansatz aufweist, der der Form der
Stange (3) entspricht und der auch die genannten Schlitze (7) definiert.

1/1

Fig.1

Fig.2

Fig.3

Fig.4

Fig.5

Fig.6

| Europäisches Patentamt | **EUROPÄISCHER RECHERCHENBERICHT** | Nummer der Anmeldung |
|---|---|---|
| | | EP 80 10 8220 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>CH - A - 456 083</u> (GROETER & CIE.) <br> * Insgesamt * <br><br> -- | 1 |
| | <u>DE - B - 1 174 029</u> (C & A) <br> * Insgesamt * <br><br> -- | 1 |
| | <u>DE - A - 1 753 114</u> (BATTS) <br> * Insgesamt * <br><br> -- | 1 |
| | <u>DE - U - 7 017 088</u> (MAINETTI DI MAINETTI ROMEO & CO.) <br> * Anspruch 1; Figur 1 * <br><br> -- | 1 |
| | <u>DE - U - 6 811 958</u> (SCHLERF & CO.) <br> * Anspruch 1; Figuren * <br><br> -- | 1 |
| | <u>FR - A - 1 600 357</u> (SCHLERF & CO.) <br> * Insgesamt * | 1 |

**KLASSIFIKATION DER ANMELDUNG (Int. Cl.³)**

A 47 J 51/093
51/097

**RECHERCHIERTE SACHGEBIETE (Int. Cl.³)**

A 47 J
B 29 F

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-04-1981 | SCHARTZ |

EPA form 1503.1 06.78